# EUROPEAN PATENT APPLICATION

(11) **EP 2 322 903 A1**
(43) Date of publication of application: **18.05.2011**
(21) Application number: 09425458.8
(22) Date of filing: 13.11.2009
(51) Int. Cl.: G01C 21/26, B60W 30/16, B60K 28/16, B60T 8/172, B60T 8/175, F16D 57/00, B60W 10/22, B60W 10/18

(54) **Vehicle control system and method by using 3D navigation maps**

(71) Applicant: Iveco S.p.A., 10156 Torino (IT)
(72) Inventor: Bertozzi, Franco, 10040 Druento (IT); Sardano, Nicola, 70031 Andria (IT)
(74) Representative: Borsano, Corrado

(57) **Abstract**

The present invention relates to a method for controlling vehicle components, comprising the steps of: integrating a vehicle satellite navigation system with 3D navigation maps; increasing the control functions of the vehicle components by means of a predictive control which exploits the 3D data about the route provided by said satellite navigation system.

## Description

### Application field of the invention

The present invention relates to the field of the vehicle control systems, and in particular to a **vehicle control**

### system and method by using 3D navigation maps.

### Description of the prior art

Vehicle navigation systems are currently widespread, and determine the route according to satellite navigation maps more and more advanced and detailed.

The current navigation systems are able to provide suggestions and alternative routes according to, for example, the shortest route, the fastest route or the so-called "green way", namely the route which allows to spare fuel and emissions; or also they can suggest the best time for travelling on a route, the less crowded roads, the presence of traffic lights, ecc... These systems are able to provide information about travelling time and arrival time continuously adjusted.

Satellite navigation maps provide data about not only latitude and longitude, but also further interesting data such as altitude, road slopes and road bending radius; moreover they provide information about speed limits, gas stations, alternative routes in case of traffic jams, etc.., thus obtaining 3D navigation maps.

On the other hand, vehicle control systems that can exploit all the data provided by the 3D navigation maps are still not known in the art.

### Summary of the invention

Therefore the aim of the present invention is to improve the vehicle control system so that it can exploit said 3D satellite navigation maps.

The purpose is thus to integrate the satellite navigation system on the vehicle, so that it can exploit the data of a 3D map and it can provide them to the vehicle control system as driving assistance data, for example as suggestions to the driver about how to drive the vehicle at best, or as a contribution for driving the electronic systems that control the vehicle, for example in order to manage safety, fuel consumption, gear shifting, engine speed, torque provided and other, by actuating a control of the predictive type.

The subject of the present invention is a method for controlling vehicle components, which comprises the steps of:
- integrating a vehicle satellite navigation system with 3D navigation maps;
- increasing the control functions of the vehicle components by means of a predictive control which exploits the 3D data about the route provided by said satellite navigation system.

The subject of the present invention is in particular a **vehicle control system and method by using 3D navigation maps,** as described more fully in the claims, which are an integral part of the present description.

### Brief description of the Figures

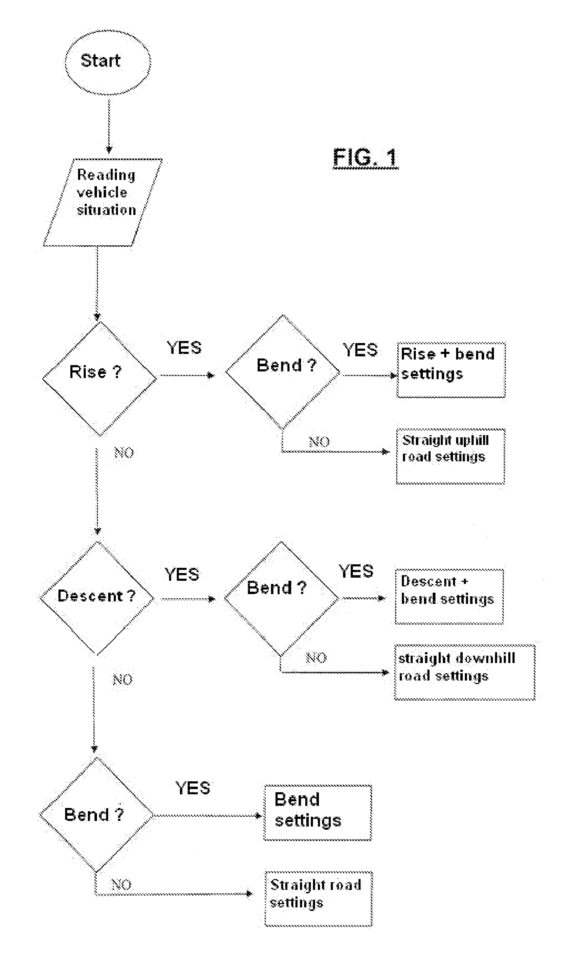

Further purposes and advantages of this invention will become more clear from the following detailed description of a preferred embodiment which is merely illustrative and not limitative, and from the figure 1 attached hereto which illustrates an example of operative flow chart of the vehicle control system which is subject of the invention.

### Detailed description of preferred embodiments of the invention

The control system that is subject of the invention operates during the so-called "autorouting" on a 3D digital map (already available) and during the navigation of the route set for reaching the destination.

Latitude, longitude and absolute altitude at sea level are the main localization parameters.

While the vehicle is travelling, the control system that is subject of the invention, by means of the interaction with the navigation systems on board, communicates the route data to the vehicle control unit or units controlling the vehicle functions, such as preferably but not limited to, in case of industrial vehicle, transmission (preferably automatic or robotized transmission), engine, brakes (for example with ABS or EBS system), active suspensions (for example pneumatic suspensions), hydraulic decelerator, stability control system (ESP).

Thus, for example, the control system that is subject of the invention can manage the engine mapping, or the transmission strategy (in case of automatic or robotized transmission), the braking or the active suspension effectiveness, or the intervention of the additional hydraulic decelerator.

All the control units that assist the driving or manage the safety systems can receive the 3D data, such as latitude and longitude, altitude, road slopes and bending radius, by interfacing with the navigation system on board using 3D maps, by means of the vehicle data communication lines.

The system therefore can use these data and it can intervene with appropriate driving control strategies.

Preferably the control system that is subject of the invention is contrived to function when the destination is previously set on the vehicle navigator, so that it can correctly find the route to be covered and therefore it can use the 3D map data relating to said route at best, according to a predictive functioning, wherein the system knows in advance the possible obstacles that can be find on the route, for example the presence of steep uphill or downhill roads or of dangerous curves.

Thus, at a certain distance before (e.g. a few hundred metres before), the system may provide the data about the route that the vehicle is going to cover to the vehicle data line, so that the vehicle control systems may gat ready for optimizing the fuel consumption, manage the transmission, etc...

For example, in the systems known in the art, an automatic transmission shifts the gear when the stress is detected, therefore during the time it takes to the system to decide the gear shifting, the driving is not optimized, while the adoption of a predictive system according to the invention allows to the automatic transmission to shift the gear in advance, solving the problem of the delay of intervention and optimizing the vehicle behaviour, for example sparing the braking system by reducing the pad wear. Or it will be possible to automatically enable the hydraulic decelerator. The driver may even avoid pressing the brake pedal, since the system will automatically perform this action.

In case of a detour from the route set on the vehicle navigator, the latter will recalculate the 3D parameters of the new route and they will be transmitted again in advance to the various control units. During the recalculation, or in any other temporary deactivation of the parameter emission, the navigator will temporarily be disabled, letting the vehicle be controlled by the systems already present on board, after that the navigator may restart as well as the predictive control. Anyway the driver will always be able to disable the system.

As a not limitative embodiment, the vehicle components that may be involved, in case of an industrial vehicle, are: engine, hydraulic decelerator, active or pneumatic suspensions, ESP stability control system, brakes, automatic or robotized transmission (if the gear shifting is manual it will have gear shift indication on display, if the transmission is automatic it will have an automatic gear shifting).

The road conditions wherein the system should typically intervene are in correspondence of rises or descents and of bends, where the driving conditions may vary with respect to a flat or straight road.

The electronic control will be realized according to two alternative embodiments: an electronic control unit will be added between the vehicle navigator and the vehicle components to be controlled, or each vehicle component involved will be equipped with its own additional intelligence in a respective electronic control unit which directly receives the 3D data from the navigator (this is the preferred solution, since it is less intrusive).

The additional control unit, or the specific control units of the various components, comprise an additional processing part, which receives the 3D data about the conditions of the road that the vehicle is going to find from the navigator, and which gets ready to actuate the controls in advance instead of actuating them at the moment according to the current systems.

Therefore the system comprises a software interface which converts the information received from the navigator into controls for the various elements.

With reference to figure 1, in a possible example of operative flow of the vehicle control system, when the system is started (Start) it gets the 3D data from the navigator (Reading vehicle situation), then it verifies if the expected road conditions are a Hill or a Descent or a Bend. In case of a Rise, or a Descent, the system also verifies if there is also a Bend at the same time. In any of these possible situations, the system controls the appropriate settings of the vehicle control systems (in the figure blocks respectively of: Rise + bend settings, or straight uphill road, or descent + bend settings, or straight downhill road, bend alone). Otherwise the system gets ready for a normal straight road.

The predictive system according to the invention works in parallel with the vehicle control system, and in case of a failure, or if a destination is not set, it is automatically disabled. However, the driver can always manually disable the system, since any driver's control intentionally prevails over these automatic interventions.

In the following there is the description of a specific example of control performed when the detected conditions are a rise or a descent, for example having 6% road slope, travelling at a speed of 50 Km/h, or a bend, having a bending radius of 80 m and travelling at a speed of 60 Km/h.

The control involves the following vehicle parts: engine, automatic transmission, hydraulic decelerator, active or pneumatic suspensions, ESP stability control system, braking system.

The following controls will be performed on the engine.
- In case of a rise. Immediately before the rise condition takes place, the engine mapping is prepared: the torque/power curve can be dynamically changed, for example by choosing it among available alternatives of driving style: economy, sport, etc., paying attention to emissions. The choice is limited to the values allowed by the manufacturer.

During the rise, an increase of the torque at low RPM is actuated, for example there is an automatic downshifting.
- In case of a descent. Immediately before the descent condition takes place, the engine is prepared to increase the engine brake, for example by controlling the variable geometry of the turbine, or the valve lift, and obtaining different levels of engine brake.

During the descents, the engine is prepared to keep the vehicle speed constant by acting on the engine brake.
- In case of a bend. Immediately before the bend condition takes place, the RPM of the engine are reduced, if the engine speed is too high, and the vehicle decelerates. Namely, according to the bending radius, the system determines the appropriate speed.

During the bend, a traction control with a control of the torque/RPM curve is performed, for example avoiding wheel slip because of an excessive power requirement. Even if the driver presses the accelerator pedal, the vehicle does not accelerate, in order to avoid providing a dangerous additional torque.

The following controls will be performed on the transmission.
- In case of a rise. Immediately before the rise condition takes place, the automatic transmission is prepared to engage low gears.

During the rise, low gears are engaged in order to increase the pickup.
- In case of a descent. Immediately before the descent condition takes place, the automatic transmission is prepared to keep the vehicle speed constant, with low gears engaged.
- In case of a bend. Immediately before the bend condition takes place, the transmission downshifts in advance.

The following controls will be performed on the hydraulic decelerator (if present).
- In case of a descent. During the descent the release of the accelerator pedal is automatically performed according to the weight and to the slope, preferably using a decelerator which intervenes at progressive levels.
- In case of a bend. Immediately before the bend condition takes place, the hydraulic decelerator is activated if the speed is too high.
- In case of a rise the decelerator does not intervene.

The following controls will be performed on the active suspensions (if present).
- In case of a bend. Immediately before the bend condition takes place, the suspensions are prepared for limiting the roll, by stiffening the suspensions in correspondence of the bend external side, and by softening the suspensions in correspondence of the bend internal side. During the bend, the roll limitation takes place.
- in case of a rise or of a descent, the suspension control may not be performed, since an auto-levelling control is already present. A levelling intervention, however, may be performed in case of pneumatic suspensions, in order to counterbalance the forward displacement of the barycentre during a descent, or backward displacement of the barycentre during a rise (pitch).

The following controls will be performed on the ESP stability control system.
- In case of a bend. In case of a bend the ESP control is performed in order to oppose the yaw: the actual steering angle is conformed to the one required with the steering wheel.
- In case of a rise or of a descent, the stability control may not intervene.

The following controls will be performed on the braking system.
- In case of a descent. Immediately before the descent condition takes place, the decelerator gets ready. During the descent, the speed is kept constant by means of the engine brake.
- In case of a bend. Immediately before the bend condition takes place, the ESP stability control system is enabled. During the bend, the traction control is required to the engine, adjusting the mapping.
- In case of a rise the braking system does not intervene. Compositions and overlapping of the effects between the two situation (descent or rise, and bend) are possible.

This invention may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

The advantages deriving from the use of this invention are evident.

The advantages mainly relate to the reduction of the fuel consumption and of the consequent emissions, to the safety and driving comfort, and to avoid unexpected overloading of the mechanical parts.

From the description set forth above it will be possible for the person skilled in the art to embody the invention with no need of describing further construction details.

## Claims

1. Method for controlling vehicle components, comprising the steps of:
- integrating a vehicle satellite navigation system with 3D navigation maps;
- increasing the control functions of the vehicle components by means of a predictive control which exploits the predictive 3D data about the route provided by said satellite navigation system.

2. Method for the vehicle control according to the claim 1, wherein said 3D predictive data about the route comprise latitude, longitude, altitude, slope and road bending radius.

3. Method for the vehicle control according to the claim 1, wherein said vehicle components comprise one or more among transmission, preferably with automatic or robotized transmission, engine, brakes, possibly with ABS or EBS, active or pneumatic suspensions, hydraulic decelerator, (ESP) stability control system.

4. Method for the vehicle control according to the claim 1, wherein said predictive control is performed in correspondence of uphill, downhill roads and/or bends, when the destination is set on said vehicle satellite navigation system.

5. Method for the vehicle control according to the claim 4, wherein said predictive control is disabled in one of the following conditions:
- in case of a detour from the route set on said vehicle satellite navigation system, while the latter recalculates the 3D predictive data of the new route;
- during the temporary deactivation of the emissions of said 3D data.

6. System for controlling vehicle components, comprising:
- a vehicle satellite navigation system integrated with 3D navigation maps;
- one or more electronic controller of the functioning of the vehicle components which perform a predictive control exploiting the predictive 3D data about the route provided by said satellite navigation system.

7. System for the vehicle control according to the claim 6, wherein said 3D predictive data about the route comprise latitude, longitude, altitude, slope and road bending radius.

8. System for the vehicle control according to the claim 6, wherein said vehicle components comprise one or more among transmission, preferably with automatic or robotized transmission, engine, brakes, possibly with ABS or EBS, active or pneumatic suspensions, hydraulic decelerator, (ESP) stability control system.

9. System for the vehicle control according to the claim 6, wherein said one or more electronic controllers perform said predictive control in correspondence of uphill, downhill roads and/or bends, when the destination is set on said vehicle satellite navigation system.

10. System for the vehicle control according to the claim 9, wherein said one or more electronic controllers disable predictive control in one of the following conditions:
- in case of a detour from the route set on said vehicle satellite navigation system, while the latter recalculates the 3D predictive data of the new route;
- during the temporary deactivation of the emissions of said 3D data.

11. Usage of a vehicle satellite navigation integrated with 3D navigation maps in a system for controlling vehicle components, as in any or the claims from 6 to 10.

12. Computer program comprising program code means suitable for performing the steps of any claim from 1 to 5, when such program is run on a computer.

13. Computer-readable means comprising a recorded program, said computer-readable means comprising program code means suitable for performing the steps according to the claims from 1 to 5, when said program is run on a computer.
